# EUROPEAN PATENT APPLICATION

(11) **EP 4 072 152 A1**
(43) Date of publication of application: **12.10.2022**
(21) Application number: 20728901.8
(22) Date of filing: 26.02.2020
(51) Int. Cl.: H04N 21/422

(54) **METHOD AND DEVICE FOR DISPLAYING EPG USER INTERFACE**

(30) Priority: 03.12.2019 CN 201911221796; 09.12.2019 CN 201911252175
(71) Applicant: VIDAA (NETHERLANDS) INTERNATIONAL HOLDINGS B.V., 6921RZ Duiven (NL)
(72) Inventor: XU, Xiangtai, Qingdao Shandong 266555 (CN); HUANG, Hongxun, Qingdao Shandong 266555 (CN); JIA, Guili, Qingdao Shandong 266555 (CN)
(74) Representative: Pfenning, Meinig & Partner mbB
(86) International application number: PCT/CN2020/076706
(87) International publication number: WO 2021/109340

(57) **Abstract**

The present disclosure provides a method for displaying an EPG user interface, including: during display of a program image, in response to an input for displaying the EPG user interface from a user, determining a program language by parsing a field for identifying the program language in EPG information, parsing a program according to a character set corresponding to the program language, generating the corresponding EPG user interface, and displaying the EPG user interface on the program image.

## Description

The present disclosure claims the priority of the Chinese patent application filed with China Patent Office on December 3, 2019, with the application number of 201911221796.2 and the invention name of "Method for Displaying EPG User Interface during Program Playing and Display Device", and the Chinese patent application filed with China Patent Office on December 9, 2019, with the application number of 201911252175.0 and the invention name of "Method for Displaying EPG User Interface during Program Playing and Display Device". The entire contents of both applications are hereby incorporated by reference.

### Field

The present disclosure relates to digital multimedia technologies, in particular to a method for displaying an EPG user interface during program playing and a display device.

### Background

The broadcast programs are arranged and displayed in a matrix form through an electronic program guide (EPG) user interface displayed on a display device which usually displays channels and time in a two-dimensional mode, and displays each broadcast program in an EPG whose size is proportional to the broadcasting duration of the broadcast program.

However, the names of programs or channels in an EPG are sometimes garbled which makes it difficult for users to tell. For example, though some Polish channels and programs can be accessed in Germany, the names of the Polish channels and programs in the EPG may be garbled.

In view of this, it is necessary to design a new scheme to overcome the above-mentioned defects.

### Summary

The embodiments of the present disclosure provide a method for displaying an EPG user interface during program playing and a display device, which are configured to solve the technical problem that EPG information cannot be accurately decoded during program playing and EPG user interface display.

The specific technical solution according to the embodiments of the present disclosure is as follows.

In a first aspect, a display device includes:
a display configured to display a program image;
a user interface configured to receive a user input; and
a controller configured to:
   in response to an input for displaying an EPG user interface from a user, determine a program language by parsing a field for identifying the program language in EPG information, parse a program according to a character set corresponding to the program language so as to parse EPG information corresponding to the program language, generate the EPG user interface according to the EPG information corresponding to the program language, and display the EPG user interface on the program image; wherein the EPG user interface includes a two-dimensional program menu sorted by channels and program playing times.

In a second aspect, a display device includes:
a display configured to display a program image;
a user interface configured to receive a user input;
an OSD module configured to control the output of a display menu;
a language setting module configured to set a menu language of the display menu by presenting setting information; and
a controller configured to:
   in response to an input for displaying an EPG user interface from a user, determine a program language by parsing a field for identifying the program language in EPG information, and parse a program according to a character set corresponding to the program language so as to parse EPG information corresponding to the program language;
   convert the EPG information corresponding to the program language into EPG information identical to the menu language; and
   generate the EPG user interface according to the converted EPG information and display the EPG user interface on the program image, wherein the EPG user interface includes a two-dimensional program menu sorted by channels and program playing times.

### Brief Description of the Drawings

Fig. 1A is a schematic diagram illustrating an operation scenario between a display device and a control device according to an embodiment of the present disclosure;
Fig. 1B is a block diagram illustrating the configuration of the control device 100 in Fig. 1A according to an embodiment of the present disclosure;
Fig. 1C is a block diagram illustrating the configuration of the display device 200 in Fig. 1A according to an embodiment of the present disclosure;
Fig. 1D is a block diagram illustrating the architecture configuration of an operating system in a memory of the display device 200 according to an embodiment of the present disclosure;
Fig. 2A is a schematic diagram illustrating a broadcast program image according to an embodiment of the present disclosure;
Figs. 2B-2E are schematic diagrams illustrating an EPG user interface according some embodiments of the present disclosure;
Fig. 3 is a schematic diagram of an EIT analysis table in the related art;
Fig. 4 is a target program language-character set mapping relationship table established according to an embodiment of the present disclosure;
Fig. 5A is a flowchart of displaying an EPG user interface during program playing according to an embodiment of the present disclosure;
Fig. 5B is a flowchart of determining a target program language according to an embodiment of the present disclosure;
Fig. 6 is a schematic diagram of text contents to be decoded obtained after EIT analysis according to an embodiment of the present disclosure;
Fig. 7A is a flowchart of an example of a default character set selection method according to an embodiment of the present disclosure;
Fig. 7B is a further flowchart of an example of a default character set selection method according to an embodiment of the present disclosure; and
Fig. 8 is a schematic diagram of a menu language setting interface according to an embodiment of the present disclosure.

### Detailed Description of the Embodiments

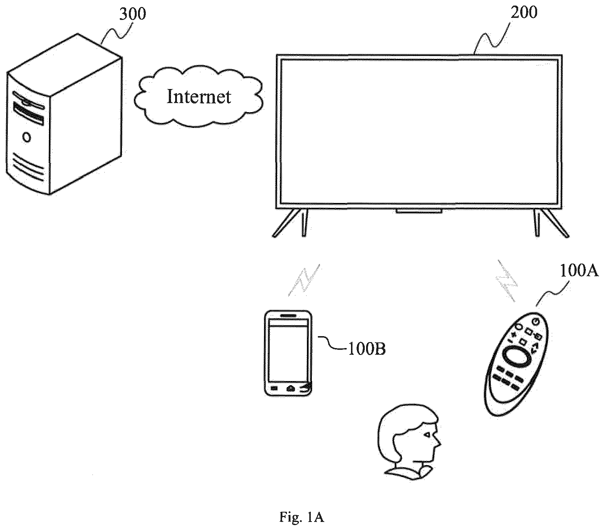

Fig. 1A is a schematic diagram illustrating an operation scenario between a display device and a control device. As shown in Fig. 1A, the control device 100 and the display device 200 may communicate with each other in a wired or wireless manner.

The control device 100 is configured to control the display device 200, can receive an operation command input from a user and convert the operation command into an instruction that the display device 200 can recognize and respond, and plays an interaction role between the user and the display device 200. For example, after a user operates channel up/down buttons on the control device 100, the display device 200 responds to the channel up/down operation.

The control device 100 may be a remote control 100A, which works based on infrared protocol communication or Bluetooth^{™} protocol communication and other short-range communication methods, and controls the display device 200 by wireless or other wired methods. A user can input user instructions through buttons on the remote control, voice input, control panel input, etc. to control the display device 200. For example, a user can input corresponding control instructions through volume up/down buttons, channel control buttons, up/down/left/right navigation buttons, a voice input button, a menu button, an on/off button and the like on the remote control to control the functions of the display device 200.

The control device 100 may also be a smart device, such as a mobile terminal 100B, a tablet computer, a computer and a notebook computer. For example, the display device 200 is controlled by using an application program running on the smart device. The application program can be configured to provide users with various controls through an intuitive user interface (UI) on a screen associated with the smart device.

By way of example, a software application can be installed on the mobile terminal 100B and the display device 200, and connection communication is realized through a network communication protocol, thus realizing the purposes of one-to-one control operation and data communication. For example, a control instruction protocol may be established between the mobile terminal 100B and the display device 200, and the functions of buttons physically arranged on the remote control 100A can be realized by operating various function keys or virtual buttons on a user interface provided on the mobile terminal 100B. Audio and video contents displayed on the mobile terminal 100B may also be transmitted to the display device 200 to realize synchronous display.

The display device 200 may have a broadcast receiving function and a computer-supported web TV function. The display device may be implemented as a digital TV, a web TV, an Internet protocol TV (IPTV), etc.

The display device 200 may be a liquid crystal display, an organic light emitting display, or a projection device. The specific type, size and resolution of the display device are not limited.

The display device 200 also performs data communication with servers 300 through various communication methods. Herein, the display device 200 may be allowed to realize communication connection through a local area network (LAN), a wireless local area network (WLAN) or other networks. The servers 300 may provide various contents and interactions to the display device 200. By way of example, the display device 200 may send and receive information such as receiving electronic program guide (EPG) data, receiving software program updates, or having access to a remotely stored digital media library. There may be one group or a plurality of groups of servers 300, or one or a plurality of types of servers. Other network service contents such as video on demand and advertisement service are provided through the servers 300.

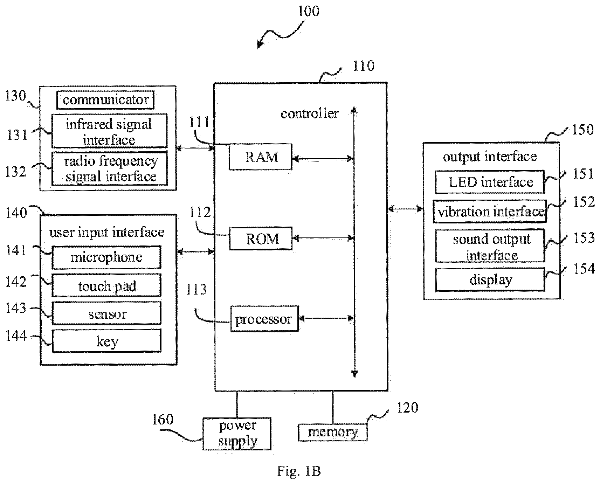

Fig. 1B is a block diagram illustrating the configuration of the control device 100. As shown in Fig. 1B, the control device 100 includes a controller 110, a memory 120, a communicator 130, a user input interface 140, an output interface 150 and a power supply 160.

The controller 110 includes a random access memory (RAM) 111, a read only memory (ROM) 112, a processor 113, a communication interface, and a communication bus. The controller 110 is configured to control the running and operation of the control device 100, as well as communication cooperation between internal components and external and internal data processing functions.

By way of example, when an interaction, such as a user pressing a button on the remote control 100A and the user touching a touch panel on the remote control 100A, is detected, the controller 110 may control to generate a signal corresponding to the detected interaction and transmit the signal to the display device 200.

The memory 120 is configured to, under the control of the controller 110, store various operating programs, data and applications which drive and control the control device 100. The memory 120 may store various control signal instructions input from a user.

Communication of control signals and data signals between the communicator 130 and the display device 200 is realized under the control of the controller 110. For example, the control device 100 transmits the control signals (e.g., touch signals or button signals) to the display device 200 via the communicator 130, and the control device 100 may receive the signals transmitted from the display device 200 via the communicator 130. The communicator 130 may include an infrared signal interface 131 and a radio frequency signal interface 132. For example, in the case of the infrared signal interface, a user input instruction needs to be converted into an infrared control signal according to an infrared control protocol, in order to transmit to the display device 200 via an infrared transmission module. As another example, in the case of the radio frequency signal interface, a user input instruction needs to be converted into a digital signal to be modulated according to a radio frequency control signal modulation protocol, and then transmitted to the display device 200 by a radio frequency transmission terminal.

The user input interface 140 may include at least one of a microphone 141, a touch pad 142, a sensor 143, keys 144, and the like, so that a user may input a user instruction associated with control of the display device 200 to the control device 100 through voice, touching, gestures, pressing, and the like.

The output interface 150 outputs the user instruction received from the user input interface 140 to the display device 200, or outputs an image or voice signal received from the display device 200. Here, the output interface 150 may include an LED interface 151, a vibration interface 152 which generates vibration, a sound output interface 153 which outputs sounds, a display 154 which outputs images, and the like. For example, the remote control 100A may receive an output signal such as audio, video, or data from the output interface 150, and display the output signal in an image form on the display 154, outputs the output signal in an audio form on the sound output interface 153, or outputs the output signal in a vibration form on the vibration interface 152.

The power supply 160 is configured to provide operation power support for each component of the control device 100 under the control of the controller 110. The power supply may take the form of batteries and related control circuits.

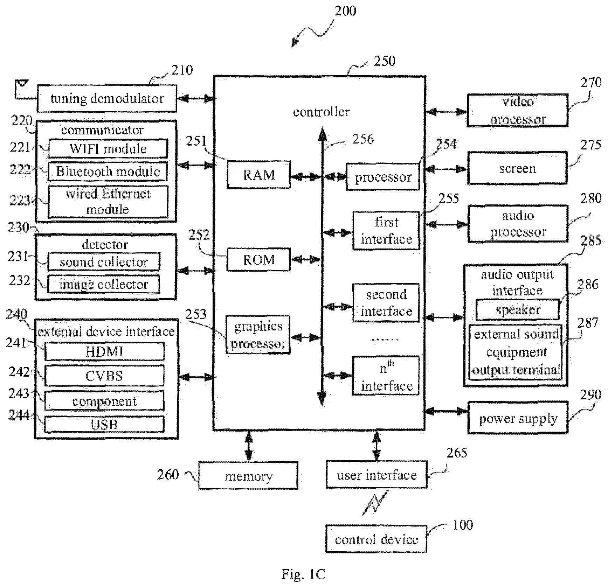

Fig. 1C is a block diagram illustrating the configuration of hardware of the display device 200. As shown in Fig. 1C, the display device 200 may include a tuning demodulator 210, a communicator 220, a detector 230, an external device interface 240, a controller 250, a memory 260, a user interface 265, a video processor 270, a screen 275, an audio processor 280, an audio output interface 285, and a power supply 290.

The tuning demodulator 210 receives broadcast and television signals in a wired or wireless manner, and can perform modulation and demodulation processing such as amplification, mixing and resonating to demodulate audio and video signals carried by the frequency of a television channel selected by a user and additional information (e.g., EPG data) from the plurality of wireless or wired broadcast and television signals.

The tuning demodulator 210 can respond to a frequency of the television channel selected by a user and the television signals carried by the frequency according to user selection and control of the controller 250.

The tuning demodulator 210 can receive signals in many ways according to different broadcasting systems of the television signals, such as terrestrial broadcasting, cable broadcasting, satellite broadcasting or Internet broadcasting. In terms of modulation types, the tuning demodulator can adopt digital modulation or analog modulation. Depending on different types of received television signals, the tuning demodulator can demodulate analog signals and digital signals.

In some other exemplary embodiments, the tuning demodulator 210 may also be in an external device, such as an external set-top box. In this way, the set-top box outputs television signals after modulation and demodulation, and the television signals are input to the display device 200 through the external device interface 240.

The communicator 220 is a component for communicating with an external device or an external server according to various communication protocol types. For example, the display device 200 may transmit content data to an external device connected via the communicator 220, or browse and download the content data from the external device connected via the communicator 220. The communicator 220 may include a network communication protocol module such as a WIFI module 221, a Bluetooth communication protocol module 222 and a wired Ethernet communication protocol module 223, or a near field communication protocol module, so that the communicator 220 may receive a control signal of the control device 100 according to the control of the controller 250, and implement the control signal as a WIFI signal, a Bluetooth signal, a radio frequency signal, etc.

The detector 230 is a component of the display device 200 to collect signals for interaction with the outside or external environment. The detector 230 may include a sound collector 231, such as a microphone, which is configured to receive a user's voice, such as a voice signal of a control instruction from the user for controlling the display device 200; alternatively, environmental sound for identifying the type of an environmental scene may be collected, thereby enabling the display device 200 to adapt to environmental noise.

In some other exemplary embodiments, the detector 230 may further include an image collector 232, such as a camera and a webcam, which may be configured to collect external environment scenes to adapt to the display parameters of the display device 200, and also configured to collect user attributes or interacting gestures with a user to realize interaction between the display device and the user.

In some other exemplary embodiments, the detector 230 may further include a light receiver for collecting ambient light intensity to adapt to the display parameters of the display device 200.

In some other exemplary embodiments, the detector 230 may further include a temperature sensor, for example, by sensing the ambient temperature, the display device 200 may adaptively adjust the display color temperature of an image. By way of example, in a high-temperature environment, the color temperature of the image displayed by the display device 200 can be adjusted to be cool; and in a low-temperature environment, the color temperature of the image displayed by the display device 200 can be adjusted to be warm.

The external device interface 240 is a component which provides the controller 250 to control data transmission between the display device 200 and an external device. The external device interface 240 may be connected with external devices such as a set-top box, a game unit and a notebook computer in a wired/wireless manner, and may receive data such as video signals (e.g., moving images), audio signals (e.g., music) and additional information (e.g., EPG) of the external devices.

The external device interface 240 may include any one or more of a high definition multimedia interface (HDMI) terminal 241, a composite video blanking synchronization (CVBS) terminal 242, an analog or digital component terminal 243, a universal serial bus (USB) terminal 244, a component terminal (not shown in the figure), and a red-green-blue (RGB) terminal (not shown in the figure).

The controller 250 controls the work of the display device 200 and responds to user operation by running various software control programs (such as an operating system and various application programs) stored on the memory 260.

As shown in Fig. 1C, the controller 250 includes a random access memory (RAM) 251, a read only memory (ROM) 252, a graphics processor 253, a CPU 254, a communication interface 255, and a communication bus 256. The RAM 251, the ROM 252, the graphics processor 253, the CPU 254 and the communication interface 255 are connected through the communication bus 256.

The ROM 252 is configured to store various system boot instructions. For example, when receiving a startup signal, the display device 200 is powered on, and the CPU 254 runs the system boot instructions in the ROM 252 and copies the operating system stored in the memory 260 into the RAM 251 to start running and initializing the operating system. After the operating system is started, the CPU 254 copies various applications in the memory 260 into the RAM 251, and then starts running and initializing the various applications.

The graphics processor 253 is configured to generate various graphics elements, such as icons, operation menus, and display graphics for receiving user instruction input. The graphics processor 253 may include an arithmetic unit for performing arithmetic by receiving various interactive instructions input from a user, and further displaying various elements according to display attributes; and include a renderer for generating various objects obtained based on the arithmetic unit and displaying rendered results on the screen 275.

The CPU 254 is configured to run the operating system and the applications stored in the memory 260, and processing various applications, data and contents according to the input instructions received from a user so as to finally display and play various audio and video contents.

In some exemplary embodiments, the CPU 254 may include a plurality of processors. The plurality of processors may include a main processor and one or more sub-processor. The main processor is configured to run some initialization operations of the display device 200 in a preload mode of the display device, and/or run the image displaying operation in a normal mode. The one or more sub-processor is configured to run an operation in states such as a standby mode of the display device.

The communication interface 255 may include a first interface to an n^{th} interface. These interfaces may be network interfaces connected with external devices via a network.

The controller 250 may control the overall operation of the display device 200. For example, in response to receiving a user input command for selecting a GUI object displayed on the screen 275, the controller 250 may perform an operation associated with the object selected by the user input command.

The object may be any one of selectable objects, such as a hyperlink or an icon. The operation associated with the selected object may be displaying a page, document, or image linked to the hyperlink, or running an application corresponding to the object. The user input command for selecting a GUI object may be an input command through various input devices (e.g., a mouse, a keyboard, and a touch pad) connected to the display device 200 or a voice command corresponding to what is spoken by a user.

The memory 260 is configured to store various types of data, software programs or applications which drive and control the operation of the display device 200. The memory 260 may be a volatile and/or nonvolatile memory. The term "memory" includes the memory 260, the RAM 251 and ROM 252 of the controller 250, or a memory card in the display device 200.

In some embodiments, the memory 260 is configured to store operating programs which drive the controller 250 in the display device 200; store various application programs built in the display device 200 and downloaded by a user from external devices; and store data such as a visual effect image for configuring various GUIs provided by the screen 275, various objects related to the GUI, and a selector for selecting the GUI objects.

In some embodiments, the memory 260 is configured to store driving programs and related data of the tuning demodulator 210, the communicator 220, the detector 230, the external device interface 240, the video processor 270, the screen 275, and the audio processor 280, such as external data (e.g., audio and video data) received from the external device interface or user data (e.g., key information, voice information, and touch information) received from the user interface.

In some embodiments, the memory 260 stores software and/or programs for performing an operating system (OS), and the software and/or programs may include, for example, a kernel, middleware, an application programming interface (API), and/or applications. By way of example, the kernel may control or manage system resources and functions implemented by other programs (such as the middleware, the API or the applications); and meanwhile, the kernel can provide interfaces to allow the middleware, the API or the applications to have access to the controller, so as to control or manage the system resources.

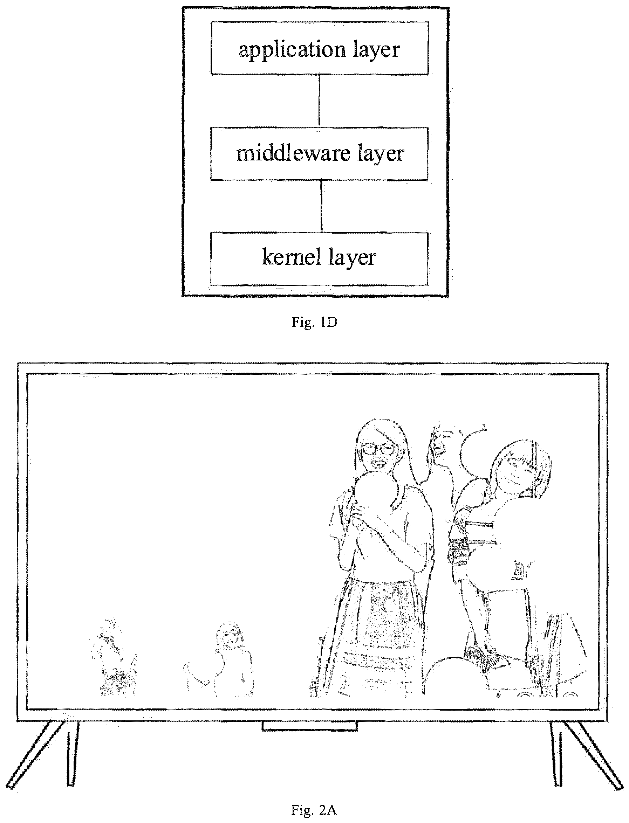

Fig. 1D is a block diagram illustrating the architecture configuration of the operating system in the memory of the display device 200. From top to bottom, the operating system includes an application layer, a middleware layer and a kernel layer in order.

Applications built in the system and non-system applications all belong to the application layer. The application layer is responsible for direct interaction with a user. The application layer may include a plurality of applications, such as a setting application, E-pos application, and a media center application. These applications can be implemented as Web applications, which are executed based on a WebKit engine, and specifically can be developed and run based on HTML5, cascading style sheets (CSS), and JavaScript.

Here, HTML, short for HyperText Markup Language, is a standard markup language configured to create web pages. The web pages are described by markup tags. HTML tags are configured to describe texts, graphics, animations, sounds, tables, links, etc. A browser reads HTML documents, explains the contents of tags in the documents, and displays them in the form of web pages.

CSS, short for Cascading Style Sheets, is a computer language configured to present HTML file styles and can be configured to define a language of style structures such as fonts, colors, and locations. CSS styles can be directly stored in HTML web pages or separate style files to control styles in the web pages.

JavaScript is a language for Web page programming, which can be inserted into HTML pages and interpreted and executed by a browser. The interaction logic of Web applications is implemented through JavaScript. The JavaScript can encapsulate a JavaScript extension interface through the browser to realize communication with the kernel layer.

The middleware layer can provide some standard interfaces to support the operation of various environments and systems. For example, the middleware layer can be implemented as a MHEG(Multimedia and Hypermedia Experts Group)-based middleware associated with data broadcasting, a DLNA middleware associated with communication with external device, or a middleware for providing a browser environment for the applications within the display device.

The kernel layer provides core system services, such as file management, memory management, process management, network management, and system security rights management. The kernel layer may be implemented as a kernel based on various operating systems, for example, a kernel based on a Linux system.

The kernel layer provides communication between system software and hardware as well, and provides device driving services for various hardware, such as: providing a display driving program for the display, providing a webcam driving program for the webcam, providing a button driving program for the remote control, providing a WiFi driving program for the WiFi module, providing an audio driving program for the audio output interface, and providing power management driving for the power management (PM) module.

The user interface 265 receives various user interactions. Specifically, the user interface is configured to transmit a user input signal to the controller 250, or transmit an output signal from the controller 250 to a user. By way of example, the remote control 100A may send input signals such as a power on/off signal, a channel selection signal, and a volume adjustment signal input from a user to the user interface 265, and then the input signals are transferred to the controller 250 through the user interface 265; alternatively, the remote control 100A may receive output signals such as audio, video, or data output from the user interface 265 and processed by the controller 250, and display the received output signals or output the received output signals in an audio or vibration manner.

In some embodiments, a user may input a user command on a graphical user interface (GUI) displayed on the screen 275, and the user interface 265 receives the user input command through the GUI. Specifically speaking, the user interface 265 may receive the user input command for controlling the position of the selector in the GUI, so as to select different objects or items.

Alternatively, a user may input a user command by inputting a specific sound or gesture, and the user interface 265 receives the user input command by recognizing the sound or gesture through a sensor.

The video processor 270 is configured to receive external video signals, and perform video data processing such as decompressing, decoding, scaling, denoising, frame rate conversion, resolution conversion, and image synthesis according to a standard coding and decoding protocol of the input signals, so as to obtain video signals which can be directly displayed or played on the screen 275.

By way of example, the video processor 270 includes a demultiplexing module, a video decoding module, an image synthesis module, a frame rate converting module, and a display formatting module.

The demultiplexing module is configured to demultiplex input audio and video data streams, for example, after an MPEG-2 stream is input, the demultiplexing module demultiplexes it into video signals and audio signals.

The video decoding module is configured to process the demultiplexed video signals, including decoding and scaling.

The image synthesis module, such as an image synthesizer, is configured to superimpose and mix a GUI signal generated by a graphic generator (such as OSD, short for on-screen display) according to user input or by itself with a scaled video image, so as to generate an image signal which can be displayed.

The frame rate converting module is configured to convert a frame rate of an input video, for example, convert a frame rate of an input 60 Hz video into a frame rate of 120 Hz or 240 Hz, and a traditional manner is realized by adopting frame interpolation mode.

The display formatting module is configured to change a signal output from the frame rate converting module into a signal conforming to a display format of the display and the like, for example, perform format conversion on a signal output from the frame rate converting module to output an RGB data signal.

The screen 275 is configured to receive image signals input from the video processor 270, and display video contents, images, and menu manipulation interfaces. The video contents displayed may come from the video contents in broadcast signals received by the tuning demodulator 210, or may come from the video contents input by the communicator 220 or the external device interface 240. The screen 275 meanwhile displays a user operation interface UI generated in the display device 200 and configured to control the display device 200.

The screen 275 may include a display module for presenting images and a driving module for driving image display. Alternatively, if the screen 275 is a projection display, it may also include a projection device and a projection screen.

The audio processor 280 is configured to receive external audio signals, and perform audio data processing such as decompressing, decoding, denoising, digital-to-analog conversion, and amplification according to the standard coding and decoding protocol of the input signals to obtain audio signals which can be played in a speaker 286.

By way of example, the audio processor 280 may support various audio formats, for example, MPEG-2, MPEG-4, advanced audio coding (AAC), and high-efficiency AAC (HE-AAC).

The audio output interface 285 is configured to receive audio signals output from the audio processor 280 under the control of the controller 250. The audio output interface 285 may include a speaker 286 or an external sound equipment output terminal 287, such as an earphone output terminal, output to a generating unit of external devices.

In some other exemplary embodiments, the video processor 270 may include one or more chips. The audio processor 280 may also include one or more chips.

In some other exemplary embodiments, the video processor 270 and the audio processor 280 may be separate chips or may be integrated with the controller 250 in one or more chips.

The power supply 290 is configured to provide power support input from an external power source to the display device 200 under the control of the controller 250. The power supply 290 may be a built-in power supply circuit within the display device 200 or a power supply outside the display device 200.

On the basis of the above-mentioned Figs. 1A-1D, it should be noted that the display device usually displays an EPG thereon so that a user can check the programs (e.g., a brief of program contents and profiles of actors and directors) of various channels by a menu provided by the EPG, or schedule recording for a future program, etc. Broadcast programs are arranged and displayed in a matrix form on an EPG user interface, channels and time are usually displayed in a two-dimensional mode, and each broadcast program in the EPG is displayed, wherein the size of a broadcasting program in the EPG is proportional to the broadcasting duration of the broadcast program.

The display process of the EPG is as follows: referring to Fig. 1C, the tuning demodulator 210 of the display device receives a broadcast signal; a decoder (not shown in the figure) extracts EPG information from the received broadcast signal, and outputs the extracted EPG information to an internal bus; and then the controller 250 stores the EPG information output to the internal bus in the memory 260 for displaying the EPG user interface.

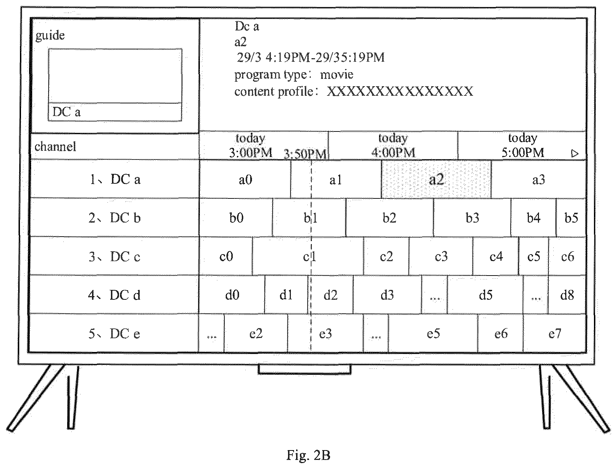

When a broadcast program image shown in Fig. 2A is currently displayed on the screen 275 of the display device, an EPG display request signal transmitted by a user through the user interface 265 is input to the controller 250, for example, by pressing an EPG button on the remote control, that is, in response to an EPG display request issued by the user, the controller 250 controls the reading of EPG information from the memory 260 so that an EPG generator (not shown in the figure) can construct the EPG based on the read EPG information, and further displays the EPG user interface shown in Fig. 2B on the screen 275 through the video processor 270.

Fig. 2B is a schematic diagram of an EPG user interface. As shown in Fig. 2B, the vertical axis is an axis for channels, and different channels are displayed in a plurality of rows; and the horizontal axis is a time axis, broadcast programs in each row are arranged according to its play time, the size of a display area of each broadcast program indicates its broadcasting duration, the start position of the display area indicates its start time, the end position of the display area indicates its end time, and the program name is displayed in the display area. In Fig. 2B, five channels (DC a-DC e) are shown in the EPG user interface, and the broadcast programs of each channel are arranged and displayed in a row according to its play time. For example, Fig. 2B shows a menu of broadcast programs between 3:00PM and 5:00PM, including broadcast programs a0-a3 on channel DC a, broadcast programs b0-b5 on channel DC b, broadcast programs c0-c6 on channel DC c, broadcast programs d0-d8 on channel DC d, and broadcast programs e0-e7 on channel DC e.

When a selector hold in a certain position for a broadcast program, a guide of the broadcast program is shown on the EPG user interface at the same time, and the guide may include the channel name, playing time, program type, and content profile of the broadcast program. As shown in Fig. 2B, when the selector falls onto the broadcast program a2, a channel identifier DC a to which the broadcast program a2 belongs, the playing time 4:19PM-5:19PM of the broadcast program a2, the program type (movie) of the broadcast program a2, and the content profile of the broadcast program a2 are displayed in a guide area located on the upper side of the EPG user interface.

The above broadcast signal is referred to as a transport stream (TS) signal, and data portions different from audio/video portions in the TS signal are reconstructed to form a program information table. The program information table includes broadcast program information such as a program association table (PAT), a program mapping table (PMT), a network information table (NIT), and an event information table (EIT). The EPG information extracted is stored in the EIT, which may include the start time and end time of the broadcast program, as well as a plurality of descriptor fields, such as a short event descriptor field for identifying the program name of the broadcast program, an extended event descriptor field for identifying a leading actor, a screenwriter, introduction, etc. of the broadcast program, a component descriptor field for identifying program type of the broadcast program, and a short event descriptor and an extended event descriptor for identifying display language of the broadcast program .

It is noted that a digital video broadcasting (DVB) standard is a series of internationally recognized digital television open standards maintained by DVB Project. Its purpose is to design a universal digital television system. EPG is an important content specified in the DVB standard.

By way of example, according to DVB standards, the program types in the content descriptor field in the EIT provides two-levels classification information. The content_nibble_level_1 classifications include: movies/dramas, news/current affairs, show/game show, sports, children's/youth programs, music/ballet/dance, art/culture, society/politics/economy, education/science/factual topics, leisure hobbies, etc.; and the content_nibble_level_2 program types provide more detailed information for the level_1 classification, for example, the level_2 program types of sports (the level_1 program type) may include: World Cup, Olympic Games, badminton, etc.

In this way, program types can be directly classified according to the level_1 categories indicated by the content descriptor field.

In the above examples, when a user needs to check the program type of a certain broadcast program, the user needs to operate navigation buttons on the remote control to enable a focus to fall into the broadcast program, and then check the program type in the guide area of the broadcast program; in this way, the user cannot visually distinguish the program type of the broadcast program displayed in the current EPG user interface, which causes confusion for a user and affects user experience. In addition, due to a limited display area for each broadcast program, sometimes even the program name cannot be displayed fully, so it is infeasible to expand the display area to display the program type of the broadcast program.

In order to solve the above problems, in the present embodiments, the program type of each broadcast program can be obtained by parsing the field which identifies the program type of the broadcast program in EPG information; and then looking up EPG interface identifiers corresponding to different program types, and each broadcast program in the EPG user interface is marked with the EPG interface identifier found in the above process. In this way, according to the different EPG interface identifiers, a user can visually tell the program types of the broadcast programs corresponding to the EPG interface identifiers so that the user can quickly find a broadcast program which you want to watch among the broadcast programs of different channels in the same time period displayed in the current EPG user interface, and the user experience is improved.

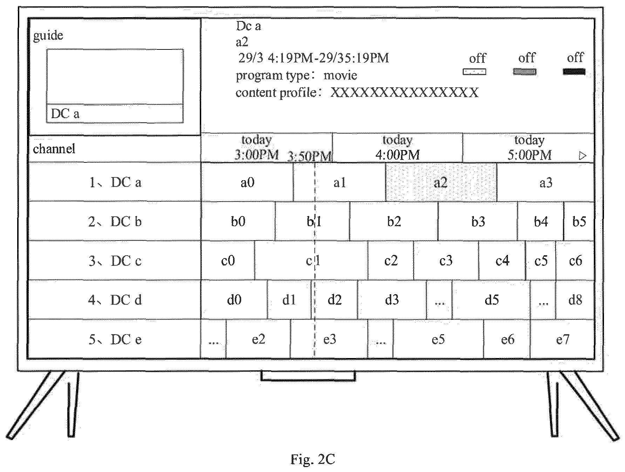

Specifically, after receiving the EPG display request signal sent from a user through the remote control, the controller starts to read the EPG information required for EPG user interface display in the memory, and parses the identification fields in the EPG information. For example, the EPG user interface shown in Fig. 2C shows the EPG information between 3:00PM and 5:00PM of the five channels corresponding to the current time read by the controller, and the channel information of each channel and the program information of all broadcast programs in each channel are obtained by parsing these identification fields, such as program name, start time and end time of the program, program type, and content profile of the program.

Next, the EPG generator determines a display area for presenting the broadcast time of each broadcast program according to a start time and end time of the broadcast program parsed, wherein the size of the display area indicates the duration of the broadcast program (the duration length between the start time and the end time); then draws these display areas determined above according to start times of the broadcast programs in each channel; and draws corresponding program names on the display areas drawn above according to the program names of the broadcast programs.

Further, the EPG generator determines the position of an EPG interface identifier for indicating the current time based on the current time obtained from the broadcast signal and broadcast program information obtained from the broadcast signal, wherein the broadcast program information is in the time period including the current time; and then draws the EPG user interface based on the position of the EPG interface identifier indicating the current time and the broadcast program information. For example, in Fig. 2C, a vertical line indicating that the current time is 3:50PM is shown, which enables a user to visually see the broadcast programs currently played on each channel at 3:50PM and the real-time playing progress of the currently played broadcast programs.

In some embodiments, in actual scenarios, a user may pay more attention to several favorite program types, for example, a user wants to visually tell certain types of the broadcast programs such as movies, shows and news, on each channel of the current EPG user interface, so as to select favorite broadcast programs for view more conveniently.

In some embodiments, after receiving the display request signal for displaying the EPG interface identifier sent from a user through the remote control, the parsed program type of the broadcast program is first obtained. Then whether the obtained program type is consistent with the program types required in the display of the EPG interface identifier predefined by a user is determined. If yes, the EPG interface identifier corresponding to the program type is returned, wherein the program type has been converted to Int type. Finally, the EPG generator draws, the obtained EPG interface identifier corresponding to the program type of the broadcast program, in the display area of the broadcast program corresponding to the program type in the EPG user interface, in order to refresh the display of the EPG user interface.

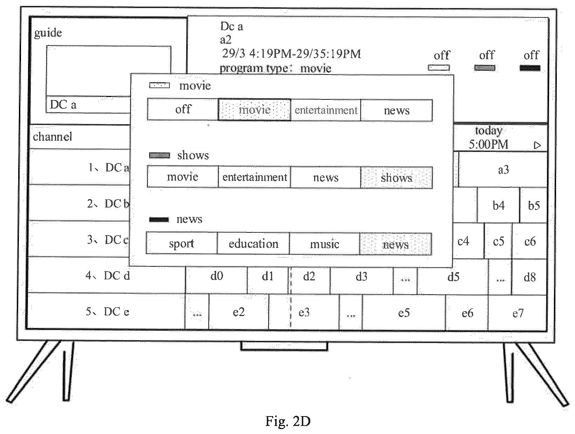

By way of example, Fig. 2D is a schematic diagram of program types required to be displayed the EPG interface identifiers customized by a user. As shown in Fig. 2D, the EPG interface identifiers here are color identifiers, for example, three color identifiers are set, that is, a light gray identifier, a dark gray identifier and a black identifier. For another example, a user sets the program types of movie, shows and news, as program types for displaying the color identifiers, and the light gray identifier is set to correspond to movie, the dark gray identifier is set to correspond to shows, and the black identifier is set to correspond to the news.

Specifically, after a user sends the display request signal for displaying the color identifiers through the remote control, a process begins by determining the color identifiers corresponding to the program types of the broadcast programs in the EPG user interface shown in Fig. 2C. Firstly, the parsed program type music of the broadcast program a0 is obtained, and it is determined that the program type music of the broadcast program a0 is different from the program types movie, shows and news customized by the user to display the color identifiers, so the color identifier corresponding to the program type of the broadcast program a0 will not be returned; next, the parsed program type movie of the broadcast program a1 is obtained, and it is determined that the program type movie of the broadcast program a1 is among the program types movie customized by the user to display the color identifiers, so the light gray identifier corresponding to the program type of the broadcast program a1 is returned; further, the parsed program type shows of the broadcast program a2 is obtained, and it is determined that the program type "shows" of the broadcast program a2 is among the program types customized by the user to display the color identifiers, so the dark gray identifier corresponding to the program type of the broadcast program a2 will be returned.

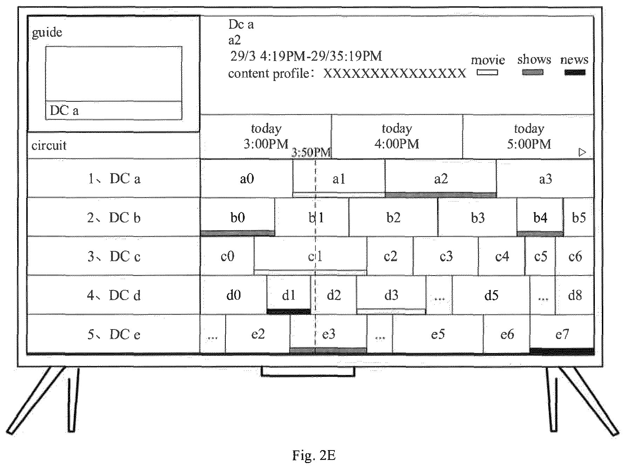

Finally, the determined color identifiers corresponding to the program types of the broadcast programs are drawn in the display areas of the broadcast programs of the corresponding program types in the EPG user interface shown in Fig. 2C, and the EPG user interface is refreshed to obtain the EPG user interface shown in Fig. 2E.

For example, in Fig. 2E, the light gray identifier and the dark gray identifier corresponding to the program types of the broadcast programs a1 and a2 in the channel Dc a are returned, and then the bottom side portions of the display areas of the broadcast programs a1 and a2 in the channel Dc a are respectively filled with light gray and dark gray, indicating that the program types of the broadcast programs a1 and a2 are respectively movie and shows; the dark gray identifiers corresponding to the program types of the broadcast programs b0 and b4 in the channel Dc b are returned, and then the bottom side portions of the display areas of the broadcast programs b0 and b4 in the channel Dc b are both filled with dark gray, indicating that the program types of the broadcast programs b0 and b4 are shows; the light gray identifier corresponding to the program type of the broadcast program c1 in the channel Dc c is returned, and then the bottom side portion of the display area of the broadcast program c1 in the Channel Dc c is filled with light gray, indicating that the program type of the broadcast program c1 is movie; the black identifier and the light gray identifier corresponding to the program types of the broadcast programs d1 and d3 in the channel Dc d are returned, and then the bottom side portions of the display areas of the broadcast programs d1 and d3 in the channel Dc d are respectively filled with black and light gray, indicating that the program types of the broadcast programs d1 and d3 are respectively news and movie; and the dark gray identifier and the black identifier corresponding to the program types of the broadcast programs e3 and e7 in the channel Dc e are returned, and then the bottom side portions of the display areas of the broadcast programs e3 and e7 in the channel Dc e are respectively filled with dark gray and black, indicating that the program types of the broadcast programs e3 and e7 are respectively shows and news.

In addition, in order to enable a user to tell the program types of the broadcast programs corresponding to different color identifiers more visually, in the present embodiments, prompt information is also displayed in the upper right corner area of the EPG user interface, which is configured to indicate different color identifiers and their corresponding program types. For example, it is displayed in the upper right corner area in Fig. 2E that light gray corresponds to movie, dark gray corresponds to shows, and black corresponds to news.

In this way, based on different color identifiers, a user can visually tell the broadcast programs with the program types of movie, shows and news on the broadcast program menu between 3:00PM and 5:00PM. The user can learn the program type of each broadcast program without operating the pop-up guide of the broadcast programs or searching for the broadcast programs with program types of movie, shows and news separately to display the broadcast programs with only one program type.

By way of example, text fields in the EIT table are decoded with a certain character set, and when these fields need to be displayed in the EPG, they need to be decoded with the character set first, but if the character set is selected incorrectly, problems may occur in the display of these fields. Therefore, whether a target program language can be decoded accurately depends primarily on whether the appropriate character set is selected.

The current DVB standard has already specified a scheme for selecting the character set, that is to select the corresponding character set according to a content of a first byte of a text content to be displayed in the event information table (EIT). The process is as follows:
(1) if a numeric value of the first byte of the text field in the EIT is between 0x00 and 0x1F, the remaining bytes of the text field after this byte are decoded by selecting a specified character set according to the rules specified in the DVB standard; and (2) if the numeric value of the first byte of the text field in the EIT is between 0x20 and 0xFF, the remaining bytes of the text field are decoded with a preset default character set.

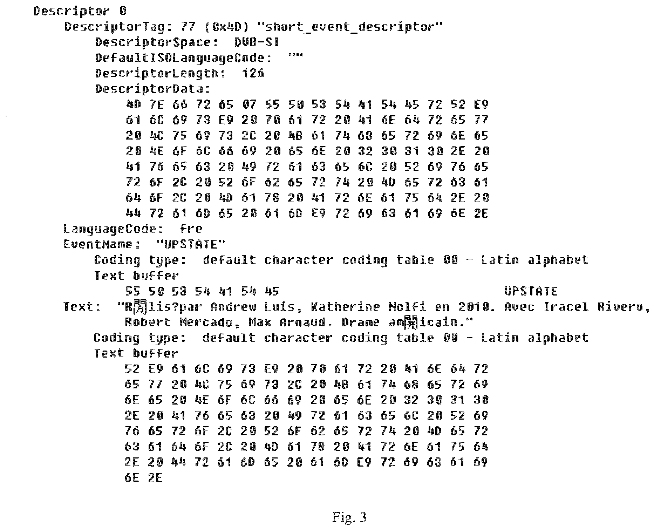

For the case in (1), different countries and regions implement the same standard; but for the case in (2), different countries and regions adopt different default character sets. For example, in the European standard 〈〈ETSI EN 300 469〉〉 associated with the DVB standard, the default character set adopted is table 00-Latin alphabet, while other standards mostly adopt the character set corresponding to the local language as the default character set. Referring to Fig. 1, for a text field in the EIT corresponding to a certain French program of a certain European channel, such as a Text buffer field in short_event_descriptor shown in Fig. 3, the first byte is "52", hexadecimally represented as 0x52, according to 〈〈ETSI EN 300 469〉〉, table 00-Latin alphabet should be used as the default character set for decoding; the target program language to be decoded is French; however, many French characters cannot be parsed by table 00-Latin alphabet, and the decoded text is "R 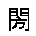 lis?par Andrew Luis, Katherine Nolfi en 2010. Avec Iracel Rivero,Robert Mercado, Max Arnaud. Drame am 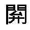 icain.", which is garbled.

For the above, a solution is to determine the default character set corresponding to the target program language used by the country or region by presetting the country or region in the system. However, this method is not completely reliable. When the country or region is set incorrectly in the system setting process, a wrong default character set may be selected. Even if the country or region information set in the system is correct, the display device can easily search the channels of other countries or regions on the borders of different countries or under the condition that it is agreed between the two countries. In this case, the default character set selected by these channels may not be able to decode the corresponding target program language according to the method of setting the country and region in advance in the prior art.

For example, though Polish channels and programs can be searched in Germany, the selected default character set corresponding to German specified in German standards cannot decode the Polish channels and programs, errors will occur in decoding, and unreadable codes will be generated.

In order to solve the technical problem that the selected default character set cannot decode the program language in the related art, in the embodiments of the present application, the program language is determined according to a program language code carried in the event information in response to the user input for displaying the EPG, that is, the determined program name, program profile, program details and other text contents of the program need to be decoded into the corresponding program language, so that a corresponding candidate character set is selected as the default character set, and then the above text contents will be accurately decoded with the default character set.

The method according to the embodiments of the present disclosure is mainly applied to a display device, including but not limited to a smart TV. In the embodiments described below, a smart TV is taken as an example of the display device for description.

In the case of a smart TV, before displaying the text contents such as the program name, program profile and program details, it is necessary to select the corresponding character set, decode the text contents to be decoded, and obtain the text contents in the program language form which will be displayed in the EPG user interface.

Under the current DVB standard, character sets include a specified character set and a default character set. Different countries and regions have a unified rule for setting the specified character set, while different countries and regions implement different standards for selecting the default character set.

Some implementations of the examples of the present disclosure will be described in details below with reference to the accompanying drawings.

In the examples of the present disclosure, as an implementation, a mapping relationship between each target program language and each candidate character set is established in advance, wherein the mapping relationship indicates that a corresponding target program language can be decoded with at least one candidate character set. That is, the mapping relationship is configured to represent the corresponding relationship between each target program language and a character set capable of decoding such target program language.

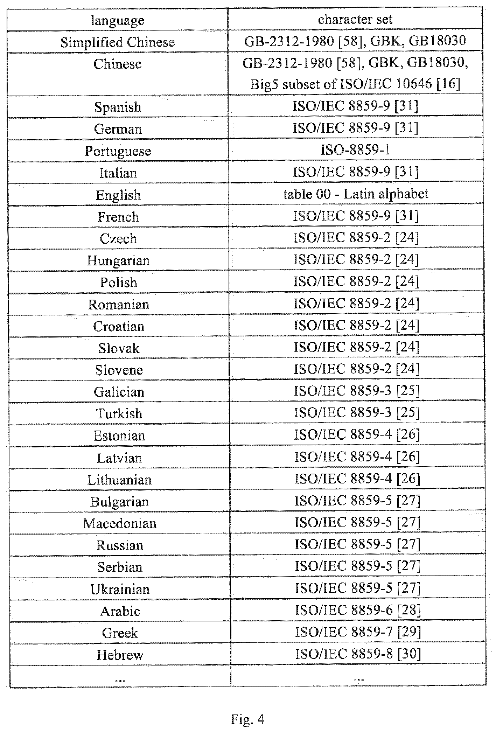

The mapping relationship between each target program language and each candidate character set can be established by establishing a mapping relationship table, a mapping relationship set or a mapping relationship topology. For example, when establishing a mapping relationship table, referring to Fig. 4, in the mapping relationship table, the target program language and the character set located in the same row have a corresponding mapping relationship, indicating that the character set is configured to decode the target program language located in the same row. For example, the character set with a specific mapping relationship with Spanish is ISO/IEC 8859-9 [31], and the character set with a specific mapping relationship with Czech is ISO/IEC 8859-2 [24].

It is noted that the mapping relationship table shown in Fig. 4 is only an example of partial mapping relationships. Each country can change the character set according to problems it has encountered. For example, GB2312 was adopted for simplified Chinese before, but later it was found that many words were not covered, such as " 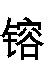 " , so new character sets appear in some embodiments. The table shown in Fig. 4 lists only about 20 languages. There are actually at least dozens of other languages in the world, which will not be listed one by one in the embodiments of the present disclosure.

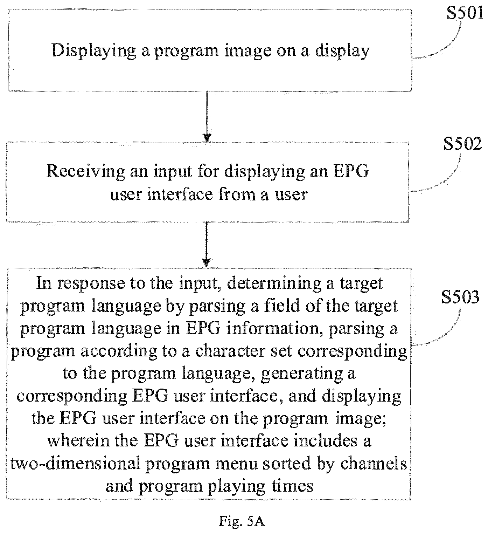

Referring to Fig. 5A, in the embodiments of the present disclosure, a method for displaying an EPG user interface during program playing may include the following processes:
S501: displaying a program image on a display;
S502: receiving a user input for displaying the EPG user interface; and
S503: in response to the user input, determining a target program language based on a field of the target program language parsed in EPG information, parsing a program according to a character set corresponding to the target program language, generating a corresponding EPG user interface, and displaying the EPG user interface on the program image; wherein the EPG user interface includes a two-dimensional program menu sorted by channels and program playing times.

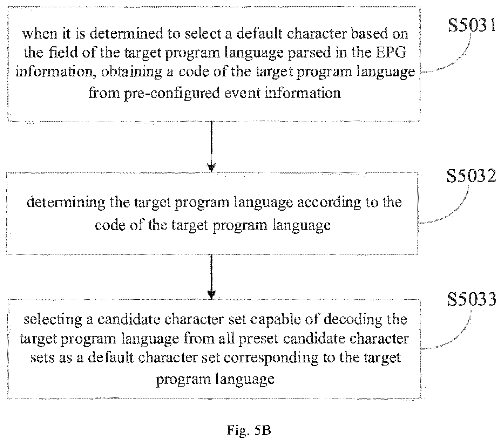

Specifically, referring to Fig. 5B, the determining the target program language based on a field of the target program language parsed in the EPG information in Step 503 may include but is not limited to the following:
S5031: when it is determined to select a default character based on the field of the target program language parsed in the EPG information, obtaining a code of the target program language from pre-configured event information.

Specifically, step S5031 may be performed as follows:
parsing an EIT, acquiring corresponding text contents to be decoded in the EPG information, determining whether a value of a first byte falls within a preset value interval according to the first byte of the text contents to be decoded, and if the value of the first byte falls within a preset value interval, determining that a default character set needs to be selected.

The text contents to be decoded refer to the text contents which needs to be decoded in the EIT, and after the text contents are decoded, text contents in the target program language form are obtained, which will then be displayed on the user interface. For example, referring to Fig. 3, it is assumed that part of the information obtained after EIT analysis is shown in Fig. 3, wherein below the field "Text buffer" the first line "62 65 49 ... 65 20", the second line "70 6C 75 ... 73 20 73" to the third line"70 65 ... 73 2E" are all text contents to be decoded, wherein the first byte of the text contents to be decoded is "62", which is 0x62 in hexadecimal format.

According to current DVB standards, the text contents to be decoded is determined according to the following process:
event information table (EIT)→ short_event_descriptor or extend_event_descriptor→ Text buffer field→ text contents to be decoded.

The process to find the text contents to be decoded is not unique, and can be adjusted accordingly based on updated DVB standards according to the methods provided by the embodiments of the present disclosure.

After determining the text contents to be decoded, the first byte of the text contents to be decoded can be obtained, and whether the default character set needs to be selected is determined according to the value of the first byte.

Unless otherwise indicated, in the embodiments of the present disclosure, the numerical representation of the first byte of the text contents to be decoded should be consistent with the numerical representation of a preset value interval. When the preset value interval is represented in a hexadecimal form, the first byte should also be represented in a hexadecimal form. For example, if the preset value interval is represented as 0x20 to 0xFF, when the first byte of the text contents to be decoded determined from the EIT table is "62", the first byte should be represented as a 0x62 form and then compared with the preset value interval.

During determination, if the value of the first byte falls within the preset value interval, it is determined that the default character set needs to be selected. According to current DVB standards, the preset value interval is a closed interval from 0x20 to 0xFF, wherein 0x represents in hexadecimal form, i.e. the hexadecimal value of the first byte falls within the interval of 0x20 to 0xFF, and then it is determined that the default character set needs to be selected.

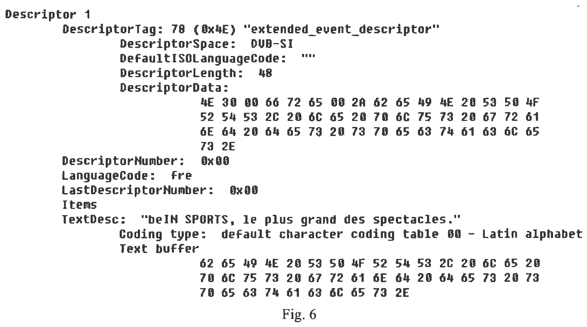

For example, in Fig. 6, the first byte of the text contents to be decoded is "62", which represents as 0x62 in hexadecimal form , which is within the interval from 0x20 to 0xFF, so it is determined that the default character set needs to be selected.

When the value of the first byte of the text contents to be decoded falls within the interval from 0x00 to 0x1F, a specified character set is selected according to the rules of tables A.3 and A.4 in 〈〈ETSI EN 300 469〉〉 . If there is no specified character set corresponding to the current target program language, it is also determined that the default character set needs to be selected.

After determining that the default character set needs to be selected, a code of the target program language is obtained from the EIT.

Specifically, in an embodiment, obtaining a code of the target program language from the pre-configured event information including: parsing the pre-configured EIT; looking for the short_event_descriptor and/or extend_event_descriptor in the EIT; and obtaining a code of the target program language based on the short_event_descriptor and/or extend_event_descriptor.

In an embodiment, a designated field may be an ISO_639_language_code field in the short_event_descriptor and/or extend_event_descriptor.

For example, both the short_event_descriptor and the extend_event_descriptor in the EIT have an ISO_639_language_code field, which carries a code of the target program language. The ISO_639_language_code field contains a 24-bit 3-character code of the target program language defined by ISO 639-2. Each character is encoded as 8 bit. For example, "0110 0110 0111 0010 0110 0101" is a 3-character code of the target program language.

S5032: determining the target program language according to the code of the target program language.

Specifically, when executing step S5032, a character identifier for identifying the code of the target program language is determined first, then preconfigured description information for the code of target program language is read, and the target program language corresponding to the character identifier is determined according to the preconfigured description information for the code of the target program language, wherein character identifiers corresponding to various target program languages are recorded in the description information of the codes of target program languages.

The description information for the codes of target program languages is information of character identifiers corresponding to various target program languages specified in the DVB standard.

For example, according to a current latest standard, the character identifier corresponding to "0110 0110 0111 0010 0110 0101" is "fre".

After obtaining the character identifier corresponding to the code of the target program language, the target program language is determined according to the identifier. For example, in the 3-character decoding standard ISO 639: 3-letter codes, "fre" corresponds to "French" , then the target program language is determined to be French, and "rus" corresponds to "Russian," so the target program language is determined to be Russian when the character identifier is "rus"; and in the 2-character decoding standard ISO 639:2-letter codes, the character identifier "FR" corresponds to "French" and the character identifier "ES" corresponds to "Spanish".

The correspondence between other binary target program language codes and character identifiers, as well as the correspondence between character identifiers and target program languages, can be obtained according to ISO 639 series of standards under the latest DVB standard, which are not listed one by one in the embodiments of the present disclosure.

S5033: Selecting a candidate character set capable of decoding the target program language from all preset candidate character sets as a default character set corresponding to the target program language.

For each target program language, at least one character set can decode the target program language. When the candidate character set is set, for each target program language, at least one character set capable of decoding the target program language should be set as a candidate character set or candidate character sets.

In the embodiments of the present disclosure, as an implementation, when a mapping relationship is established in advance before S301, at least one candidate character set capable of decoding the target program language is correspondingly selected from all the preset candidate character sets based on the mapping relationship in S5033.

For example, in the mapping relationship table shown in Fig. 4, the character set corresponding to French is ISO/IEC 8859-9 [31], the character set corresponding to Russian is ISO/IEC 8859-5 [27], so when the target program language is French, ISO/IEC 8859-9 [31] is selected as a default character set, and when the target program language is Russian, ISO/IEC 8859-5 [27] is selected as a default character set.

As another implementation, when the mapping relationship has not been established in advance before S5031, after determining the target program language, the character set capable of decoding the target program language is searched from the candidate character sets.

In general, a target program language corresponds to a candidate character set, and several target program languages each corresponds to more than two candidate character sets, for example, Chinese includes simplified Chinese and traditional Chinese which adopt different character sets respectively. Simplified Chinese can be decoded with GB-2312-1980 [58], GBK, GB18030, etc., so GB-2312-1980 [58], GBK and GB18030 can all be used as the candidate character sets for simplified Chinese. Traditional Chinese is generally decoded with Big5 subset of ISO/IEC 10646 [16], so Big5 subset of ISO/IEC 10646 [16] is used as the candidate character set for traditional Chinese. Therefore, the number of candidate character sets for Chinese is four, including the candidate character sets for simplified Chinese and the candidate character sets for traditional Chinese.

When a target program language has only a candidate character set, the corresponding candidate character set is directly taken as a default character set. When one target program language corresponds to more than two candidate character sets, the default character set is selected according to following process.

If the number of the candidate character sets capable of decoding the target program language is determined to be greater than 1, one of the candidate character sets is selected as a default character set randomly or according to instructions; if it is determined that messy codes occur after setting the default character set to decode, another candidate character set is re-selected as the default character set randomly or according to indexes ; and if it is determined that there is no candidate character set capable of decoding the target program language, a preset character set is selected as a default character set.

In an embodiment, a plurality of candidate character sets corresponding to the target program language can be sorted in a preset mapping relationship table, and selection can be performed in sequence according to the order of the candidate character sets in the mapping relationship table.

For example, for simplified Chinese, according to the order in the mapping relationship table, firstly, GB-2312-1980 [58] is selected for decoding, then whether messy codes are generated by decoding with GB-2312-1980 [58] is determined, if not, GB-2312-1980 [58] is taken as a default character set, and if yes, the next candidate character set GBK is selected for decoding; whether messy codes are generated is determined, if there is no messy codes, GBK is taken as a default character set, and if there are messy codes, the next candidate character set GB18030 is selected for decoding; whether messy codes are generated is determined, if there are no messy codes, GB18030 is taken as a default character set, and if there are messy codes, it means that no candidate character set can accurately decode simplified Chinese and no character set matching simplified Chinese is found; in this case, the preset character set is taken as a default character set, for example, the preset character set can be table 00-Latin alphabet.

The following lists a complete implementation scenario.

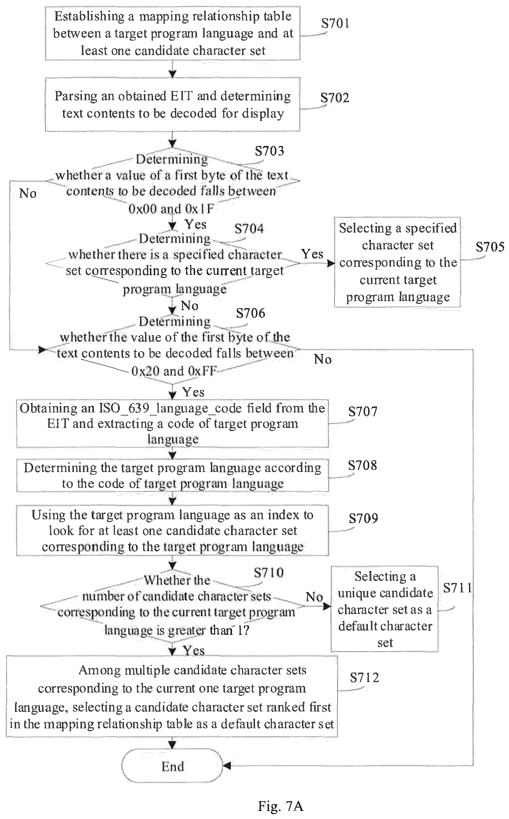

Referring to Fig. 7A, the present embodiment mainly includes the following processes.
S701: Establishing a mapping relationship table between a target program language and at least one candidate character set.
S702: Parsing an obtained EIT and determining text contents to be decoded for display.
S703: Determining whether a value of a first byte of the text contents to be decoded falls between 0x00 and 0x1F, if yes, going to S704, otherwise, going to S706.
S704: Determining whether there is a specified character set corresponding to the current target program language, if so, going to S705; otherwise, going to S706.
S705: Selecting a specified character set corresponding to the current target program language.
S706: Determining whether the value of the first byte of the text contents to be decoded falls between 0x20 and 0xFF, if so, going to S707, otherwise, ending the process.
S707: Obtaining an ISO_639_language_code field from the EIT and extracting a code of the target program language.
S708: Determining the target program language according to the code of the target program language.

Specifically, first a character identifier is determined according to the code of the target program language, and then the corresponding target program language is determined according to the character identifier. For example, when the character identifier for identifying the code of the target program language is chi, it is determined to be Chinese, and when the character identifier for identifying the code of the target program language is zho, it is determined to be simplified Chinese.

S709: Reading the mapping relationship table established in S701, and using the target program language as an index to look for at least one candidate character set corresponding to the target program language.

For example, when the character identifier is zho, it is determined that the target program language is simplified Chinese, and taking "simplified Chinese" as the index, the corresponding candidate character sets are GB-2312-1980 [78], GBK, and GB18030 in sequence. When the character identifier is chi, it is determined that the target program language is Chinese, and taking "Chinese" as the index, the corresponding candidate character sets found are GB-2312-1980 [78], GBK, GB18030, and Big7 subset of ISO/IEC 10646 [16] in sequence.

S710: Determining whether the number of candidate character sets corresponding to the current target program language is greater than 1, if yes, going to S712; otherwise, going to S711.

S711: Selecting a unique candidate character set as a default character set. For example, when the target program language is French, the candidate character set for French is only one: ISO/IEC 8879-9 [31], so ISO/IEC 8879-9 [31] is directly used as the default character set.

S712: Among the multiple candidate character sets corresponding to the current one target program language, selecting a candidate character set ranked first in the mapping relationship table as a default character set.

For example, among the multiple candidate character sets corresponding to simplified Chinese, GB-2312-1980 [78] is the first among the candidate character sets, so GB-2312-1980 [78] is selected as the default character set.

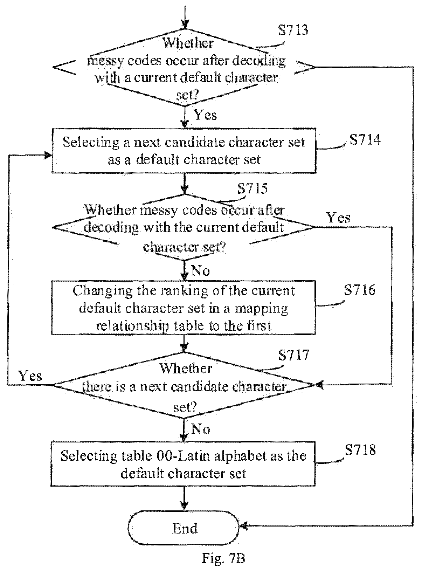

Based on the above embodiments, in some embodiments, if one target program language corresponds to more than two candidate character sets, the following processes can be executed as shown in Fig. 7B.

S713: Detecting whether messy codes occur after decoding with a current default character set: if yes, going to S714; otherwise, ending the process.

That is, whether there are messy codes after decoding with GB-2312-1980 [78] is detected, and if it is determined that there are messy codes, S714 is performed.

S714: Selecting a next candidate character set as the default character set.

Specifically, selection is performed in sequence according to the order in the mapping relationship table.

For example, GBK is selected as a current default character set when messy codes occur after decoding with GB-2312-1980 [78].

S715: Detecting whether messy codes occur after decoding with the current default character set, if yes, going to S717, otherwise, going to S716.

For example, if messy codes still occur after decoding with GBK, the method goes to S717, and if there are no messy codes, the method goes to S716.

S716: Taking the current default character set as a preferred default character set, and changing the ranking of the default character set in the mapping relationship table to the first.

For example, when GBK is able to decode correctly without generating messy codes, GBK is changed to be the first among candidate character set in the mapping relationship table.

S717: Determining whether there is a next candidate character set, if yes, going back to S714, otherwise, going to S718.

S718: Selecting table 00-Latin alphabet as the default character set.

For example, as shown in Fig. 2B, after parsing field information for identifying the program language in the EIT, it is determined that channels DC a, DC b, DC c and Dc d and the programs thereof are all in German, then the corresponding programs are parsed according to the character set ISO/IEC 8859-9 [31] corresponding to German as shown in Fig. 4, and EPG information corresponding to German is generated; after parsing field information for identifying the program language in the EIT, it is determined that channel Dc e and the programs thereof are in Polish, then the corresponding programs are parsed according to the character set ISO/IEC 8859-2 [24] corresponding to Polish as shown in Fig. 4, and EPG information corresponding to Polish is generated; at last, the EPG user interface is generated and displayed based on the EPG information corresponding to German and the EPG information corresponding to Polish respectively. In this way, the EPG user interface can provide a user with program information in the original language.

For another example, referring to the above example, after generating the EPG information corresponding to German and the EPG information corresponding to Polish, if a language setting module in the display device is configured to set German as the current menu language, that is, an OSD module in the display device is controlled to display the menu in German, then the generated EPG information corresponding to Polish can also be converted into the current menu language German, and then the EPG user interface is generated and displayed based on the EPG information corresponding to German and the EPG information corresponding to Polish which has been converted into the current menu language. In this way, the EPG user interface can provide a user with program information in the current menu language, which can better meet the needs of the user.

In the above examples, the conversion process includes, for example: calling an SDK translation tool, inputting the EPG information which needs conversion into the SDK translation tool, and obtaining the converted EPG information in the target language. In specific implementations, the SDK translation tool is called, and the EPG information corresponding to Polish is input into the SDK translation tool, so that the SDK translation tool recognizes Polish and then outputs the EPG information which has converted to German.

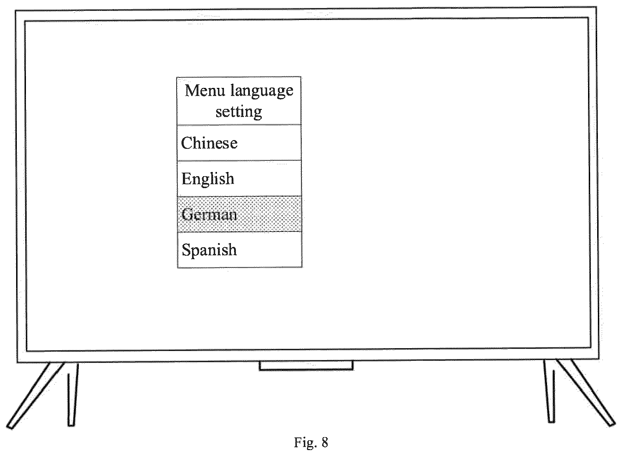

In the above examples, as shown in Fig. 8, in a setting interface for menu language, the current menu language of the display device can be configured according to user input, for example, if the menu language is configured to be German, the menu language of the display device is output and displayed in German.

In some embodiments, the menu language is a system menu language of the display device, and may be a configurable menu language that a user selects from a plurality of languages based on the navigation prompt of the display device during first starting the display device after the user purchases the display device first. It is generally consistent with the corresponding language of the region where the display device is purchased, or with the language preference of the user.

In some embodiments, the EPG information corresponding to other languages can be converted into the EPG information corresponding to the current menu language in the above examples.

To sum up, in the embodiments of the present disclosure, after the display device displays the program image, in response to the user input for displaying the EPG user interface, the target program language is determined by parsing the field of the target program language in the EPG information, the program is parsed according to a character set corresponding to the target program language, the corresponding EPG user interface is generated, and the EPG user interface is displayed on the program image; wherein the EPG user interface includes the two-dimensional program menu sorted by channels and program playing times.

Since the target program language is determined by parsing the fields in the EPG information, the display device is able to accurately know the target program language of the current program for decoding, and then select a corresponding default character set according to the target program language. For any country or region, the selected default character set is matched with the target program language of the current program for decoding. By using the default character set, the text contents of the current program for decoding can be accurately decoded, significantly reducing the probability of the messy codes, improving the accuracy of the text contents displayed in the form of the target program language, and further improving user experience.

In some embodiments, the mapping relationship table is established in advance, and after the target program language is determined, the corresponding candidate character set can be quickly determined as the default character set by using the target program language as an index, without determining the target program language first and then searching for the corresponding character set temporarily, thus improving the efficiency of selecting the default character set.

In some embodiments, when the target program language corresponds to a plurality of candidate character sets, the candidate character set which is able to realize accurate decoding will be selected and ranked first among the plurality of the character sets, so that the character set which is able to realize accurate decoding can be determined as soon as possible during subsequent selection, instead of going through the same tedious determination process again and again, which further improves the selection efficiency of the default character set.

Those skilled in the art will appreciate that the embodiments of the present disclosure may be implemented as methods, systems, or computer program products. Therefore, the present disclosure may take the form of hardware embodiments, software embodiments, or embodiments combining software and hardware aspects. Furthermore, the present disclosure may take the form of computer program products implemented on one or more computer usable storage media (including but not limited to a magnetic disk memory, a CD-ROM, an optical memory, etc.) having computer program codes embodied therein.

The present disclosure is described with reference to flowcharts and/or block diagrams of the method, device (system), and computer program product according to the embodiments of the present disclosure. It should be understood that each flow and/or block in the flowcharts and/or block diagrams, and combinations of flows and/or blocks in the flowcharts and/or block diagrams, may be implemented by computer programs. These computer programs may be provided to a processor of a general purpose computer, special purpose computer, embedded processor, or other programmable data processing apparatus to produce a machine, such that the programs executed by the processor of the computer or other programmable data processing apparatus produce a device for implementing the functions specified in one or more flows in the flowcharts and/or one or more blocks in the block diagrams.

These computer programs may also be stored in a computer-readable memory which is able to direct the computer or other programmable data processing apparatus to function in a particular manner, such that the programs stored in the computer-readable memory produce an article of manufacture including an instruction device which implements the functions specified in one or more flows in the flowcharts and/or one or more blocks in the block diagrams.

These computer program instructions may also be loaded onto a computer or other programmable data processing apparatus such that a series of operational steps are performed on the computer or other programmable apparatus to produce a computer implemented process, such that the instructions executed on the computer or other programmable apparatus provide steps for implementing the functions specified in one or more flows in the flowcharts and/or one or more blocks in the block diagrams.

Although the embodiments of the present disclosure have been described, those skilled in the art can make additional changes and modifications to these embodiments once they know the basic inventive concepts. Therefore, the appended claims are intended to be interpreted as including the embodiments and all changes and modifications that fall within the scope of the present disclosure.

Obviously, those skilled in the art can make various changes and modifications to the embodiments of the present disclosure without departing from the spirit and scope of the embodiments of the present disclosure. Thus, if these modifications and variations of the embodiments of the present disclosure fall within the scope of the claims of the present disclosure and their equivalents, the present disclosure intends to include these modifications and variations.

## Claims

1. A display device, comprising:
a display configured to display a program image;
a user interface configured to receive a user input; and
a controller configured to:
in response to an input for displaying an Electronic Program Guide, EPG user interface from a user, determine a program language by parsing a field for identifying the program language in EPG information, parse a program according to a character set corresponding to the program language so as to parse EPG information corresponding to the program language, generate the EPG user interface according to the EPG information corresponding to the program language, and display the EPG user interface on the program image;
wherein the EPG user interface comprises a two-dimensional program menu sorted by channels and program playing times.

2. The display device according to claim 1, wherein the controller is configured to:
determine the program language according to the field for identifying the program language in an Event Information Table, EIT.

3. The display device according to claim 1, wherein the controller is configured to:
inquire a mapping relationship between the program language and candidate character sets of the program language, and select a candidate character set capable of decoding the program language.

4. The display device according to claim 1, wherein the controller is further configured to:
establish a mapping relationship between the program language and each of candidate character sets, wherein the mapping relationship indicates that one corresponding program language is able to be decoded with at least one candidate character set.

5. The display device according to claim 1, wherein program information displayed in the EPG user interface is displayed in at least two language forms.

6. A display device, comprising:
a display configured to display a program image;
a user interface configured to receive a user input;
an OSD module configured to control output of a display menu;
a language setting module configured to set a menu language of a display menu by presenting setting information; and
a controller configured to:
in response to the user input for displaying an Electronic Program Guide, EPG user interface, determine a program language by parsing a field identifying the program language in EPG information, and parse a program according to a character set corresponding to the program language so as to parse EPG information corresponding to the program language;
convert the EPG information corresponding to the program language into EPG information corresponding to the menu language; and
generate the EPG user interface according to converted EPG information and display the EPG user interface on the program image; wherein the EPG user interface comprises a two-dimensional program menu sorted by channels and in program playing times.

7. The display device according to claim 6, wherein the controller is configured to:
parse a preconfigured Event Information Table, EIT;
look for a short_event_descriptor and/or extend_event_descriptor for identifying the program language in the EIT; and
obtain a code of the program language based on the short_event_descriptor and/or the extend_event_descriptor.

8. The display device according to claim 7, wherein the controller is configured to:
determine a character identifier for indicating the code of the program language; and
read preconfigured description information for the code of the program language, and determine the program language corresponding to the character identifier according to the preconfigured description information;
wherein character identifiers corresponding to various program languages are recorded in the preconfigured description information.

9. The display device according to claim 6, wherein the controller is configured to:
after parsing the EPG information corresponding to the program language,
in response to the EPG information corresponding to the program language being inconsistent with the menu language configured in the language setting module, convert the EPG information corresponding to the program language into EPG information corresponding to the menu language; and
generate the EPG user interface according to converted EPG information.

10. A method for displaying an Electronic Program Guide, EPG user interface, comprising:
during display of a program image, in response to an input for displaying an EPG user interface from a user, determining a program language by parsing a field for identifying the program language in EPG information, parsing a program according to a character set corresponding to the program language so as to parse EPG information corresponding to the program language, generating the EPG user interface according to the EPG information corresponding to the program language, and displaying the EPG user interface on the program image;
wherein the EPG user interface comprises a two-dimensional program menu sorted by channels and program playing times.

11. The method according to claim 10, further comprising:
determining the program language according to the field for identifying the program language in an Event Information Table, EIT.

12. The method according to claim 10, further comprising:
inquiring a mapping relationship between the program language and candidate character sets of the program language, and selecting a candidate character set capable of decoding the program language.

13. The method according to claim 10, further comprising:
establishing a mapping relationship between the program language and each of candidate character sets, wherein the mapping relationship indicates that one corresponding program language is able to be decoded with at least one candidate character set.

14. The method according to claim 10, wherein the program information displayed in the EPG user interface is displayed in at least two language forms.

15. A method for displaying an Electronic Program Guide, EPG user interface, comprising:
during display of a program image, in response to a user input for displaying the EPG user interface, determining a program language by parsing a field for identifying the program language in EPG information, and parsing a program according to a character set corresponding to the program language so as to parse EPG information corresponding to the program language;
converting the EPG information corresponding to the program language into EPG information corresponding to a menu language of a display device, wherein the menu language of a display menu is set by setting information so as to output the display menu according to the menu language; and
generating the EPG user interface according to converted EPG information and displaying the EPG user interface on the program image, wherein the EPG user interface comprises a two-dimensional program menu sorted by channels and in a program playing time order.

16. The method according to claim 15, further comprising:
parsing a preconfigured Event Information Table, EIT;
looking for a short_event_descriptor and/or extend_event_descriptor identifying the program language in the EIT; and
obtaining a code of program language based on the short_event_descriptor and/or the extend_event_descriptor.

17. The method according to claim 16, further comprising:
determining a character identifier for indicating the code of the program language code; and
reading preconfigured description information of the code of program language, and determining the program language corresponding to the character identifier according to the preconfigured description information;
wherein character identifiers corresponding to various program languages are recorded in the preconfigured description information.

18. The method according to claim 15, further comprising:
after parsing the EPG information corresponding to the program language,
in response to that the EPG information corresponding to the program language is inconsistent with the menu language configured in a language setting module, converting the EPG information corresponding to the program language into EPG information corresponding to the menu language; and
generating the EPG user interface according to converted EPG information.
